# EUROPEAN PATENT SPECIFICATION

(11) **EP 0 996 840 B1**
(45) Date of publication and mention of the grant of the patent: **12.11.2003**
(21) Application number: 99925745.4
(22) Date of filing: 21.05.1999
(51) Int. Cl.: F16L 37/44

(54) **HIGH PRESSURE FILLING NOZZLE**
HOCHDRUCKFÜLLSTUTZ
BUSE DE REMPLISSAGE HAUTE PRESSION

(30) Priority: 22.05.1998 CA 2238590
(43) Date of publication of application: 03.05.2000
(73) Proprietor: Delaware Capitol Formation, Inc., Wilmington, Delaware 19803 (US)
(72) Inventor: DUBINSKY, Victor, North York, Ontario M6A 2Y5 (CA)
(74) Representative: Baker, Karen Veronica, Dr.
(86) International application number: US9911323
(87) International publication number: WO99061835

(56) References cited:
- EP-A- 0 039 977
- FR-A- 2 063 957
- GB-A- 1 118 721

## Description

### BACKGROUND OF THE INVENTION

### Field of the Invention

This invention relates to a high pressure filling nozzle. In particular, the invention relates to a nozzle which provides a sealed connection to an inlet of a receptacle for filling the receptacle.

### SUMMARY OF THE INVENTION

It is an object of the invention to provide a nozzle which can quickly, easily, and safely create a sealed connection to an inlet of a receptacle for filling the receptacle with the high pressure fluid.

### BRIEF DESCRIPTION OF THE DRAWINGS

In order that the invention may be more clearly understood, the preferred embodiment thereof will now be described in detail by way of example, with reference to the accompanying drawings, in which:
Fig. 1 is a cross-sectional view of a preferred embodiment of the invention in a disengaged position;
Fig. 2 is a cross-sectional view of the preferred embodiment in a partially engaged position;
Fig. 3 is a cross-sectional view of the preferred embodiment connected to a receptacle;
Fig. 4 is a cross-sectional view of the preferred embodiment connected to a receptacle;
Fig. 5 is a cross-sectional view of the preferred embodiment connected to a receptacle in a valve open position;
Fig. 6 is a cross-sectional view of the preferred embodiment connected to a receptacle commencing disengagement;
Fig. 7 is a cross-sectional view of the preferred embodiment in a disengaged position;
Fig. 8 is a cross-sectional view of the preferred embodiment in the engaged position without a receptacle;
Fig. 9 is a cross-sectional view of the preferred embodiment perpendicular to the cross-sectional views of Figs. 1-8.

### DESCRIPTION OF THE PREFERRED EMBODIMENT

According to the present invention, there is provided a fluid nozzle according to claims 1, 6 or 7.

In accordance with another feature of the invention, the valve of is arranged in an inlet cavity.

In accordance with another aspect of the invention, the connecting jaws extend in an axial direction beyond the nozzle outlet and are radially movable inwardly to securely attach and seal the nozzle outlet with a receptacle inlet. Further, a control ring is arranged adjacent the connecting jaws and is axially movable relative thereto. The axial movement of the control ring allows radial movement of the connecting jaws.

In accordance with another aspect of the invention, the piston is arranged in a piston cavity. This cavity is capable of being in fluid communication with the inlet cavity. Further, the valve is biased to close the fluid flow passage through the inner pipe by the pressure of a high pressure fluid in the inlet cavity. The area of the piston cavity on which the high pressure fluid acts is larger than the area on which high pressure fluid acts to bias the valve closed.

Further features of the invention are found in providing a nozzle housing having a bore therein, a pin connected to the outer sleeve and received in the bore, and a channel in the pin which is in fluid communication with the piston cavity. The housing is axially movable with respect to the outer sleeve in order to position the pin channel in fluid communication with the inlet cavity.

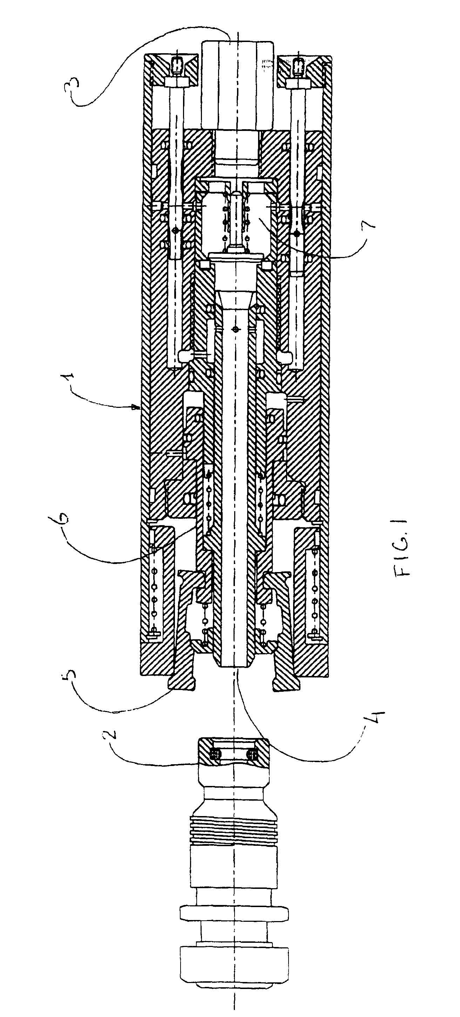

Referring now to the drawings in detail, wherein like numerals indicate the same elements throughout the views, Fig. 1 shows a filling nozzle 1 in the disconnected position, and a corresponding receptacle inlet 2 sealably connected to any suitable receptacle (not shown), such as, for example, a fuel tank of a gaseous fuel vehicle. The filling nozzle is connected to a supply of high pressure fluid (not shown). The nozzle has a nozzle inlet 3 for the high pressure fluid and an outlet 4, which seals against the inlet 2 of the receptacle to fill the receptacle. A plurality of connecting jaws 5 are connected to a piston 6. The jaws are positioned around the periphery of the outlet 4 and are radially movable. High pressure fluid occupies the inlet cavity 7.

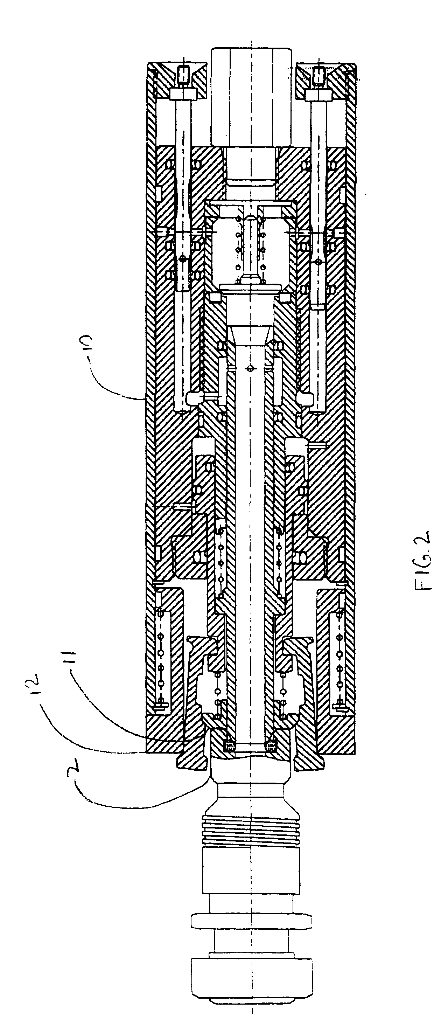

As shown in Fig. 2, the filling nozzle is connected to the receptacle inlet 2 by pressing the receptacle inlet against the control ring 11 and sliding a retaining ring 12 projecting axially from the outlet end of the outer sleeve 10 toward the receptacle.

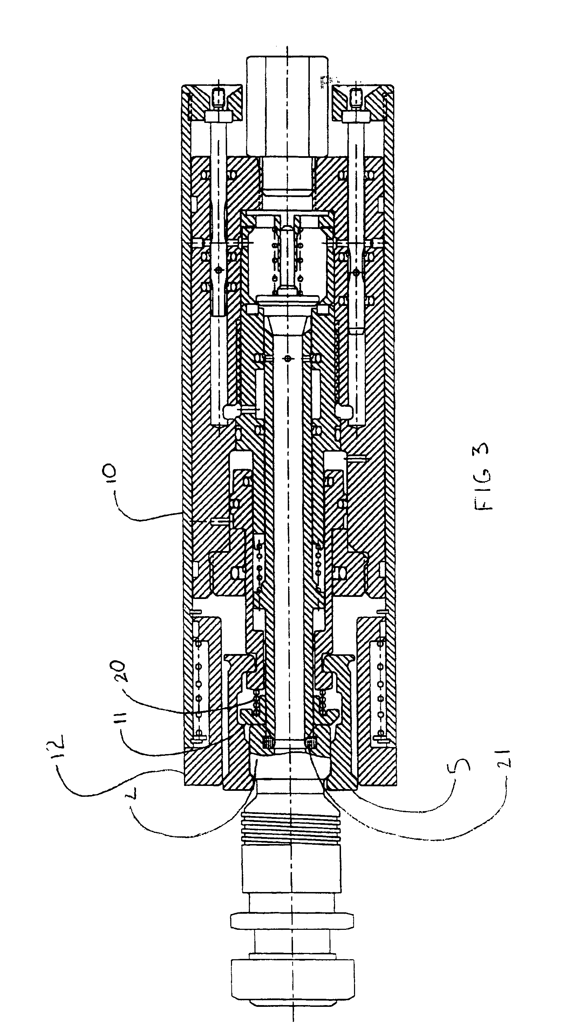

As shown in Fig. 3, the receptacle inlet 2 pushes against the control ring 11, compressing the control ring against the control spring 20. The movement of the outer sleeve toward the receptacle causes the retaining ring 12 to push the jaws 5 radially inward to securely attach and seal the nozzle to the receptacle inlet. A seal 21 provides a gas-tight connection between the nozzle outlet 4 and receptacle inlet.

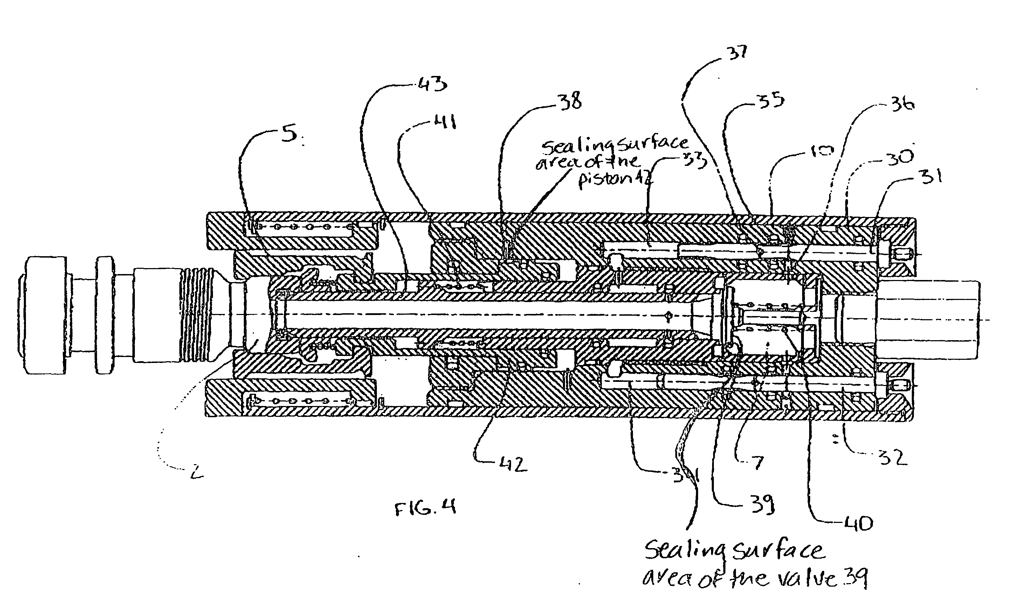

Fig. 4 shows the outer sleeve 10 abutting the nozzle housing 30. The sleeve is prevented from moving any relative to the housing. A first pin 31 and second pin 32 project axially from the end of the outer sleeve. The first and second pins are received in a corresponding first bore 33 and second bore 34, respectively. A first groove 35 is defined in the first pin 31. In the connected position shown in Fig. 4, the first groove is in fluid communication with a radial channel 36 which in turn is in fluid communication with the inlet cavity 7. The first groove 35 permits the high pressure fluid to communicate with a first drilling 37 (only the entry point is shown). The drilling is in fluid communication with a piston cavity 38. Accordingly, the high pressure fluid travels through the first drilling 37 to occupy the piston cavity 38.

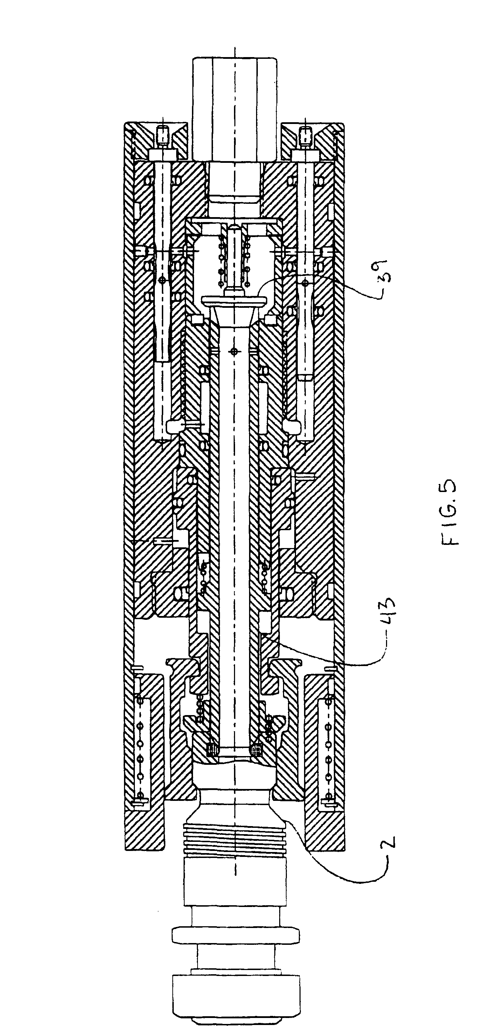

The area of the piston cavity 38 on which the high pressure acts results in a larger force than the combined forces of the high pressure acting on the valve 39, the valve spring 40, and the piston spring 41. Accordingly, the force generated by the high pressure fluid in the piston cavity moves the piston 42, jaws 5, and main pipe 43 to the right toward the nozzle inlet 3 relative to the remainder of the nozzle. This in turn causes the valve 39 to open and the high pressure fluid to travel through the main pipe 43 to the receptacle inlet 2, as shown in Fig. 5.

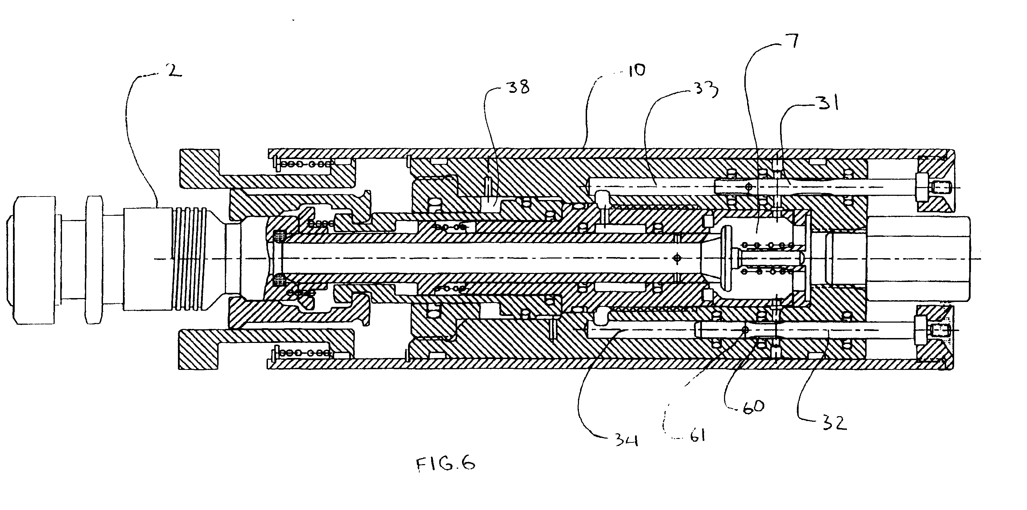

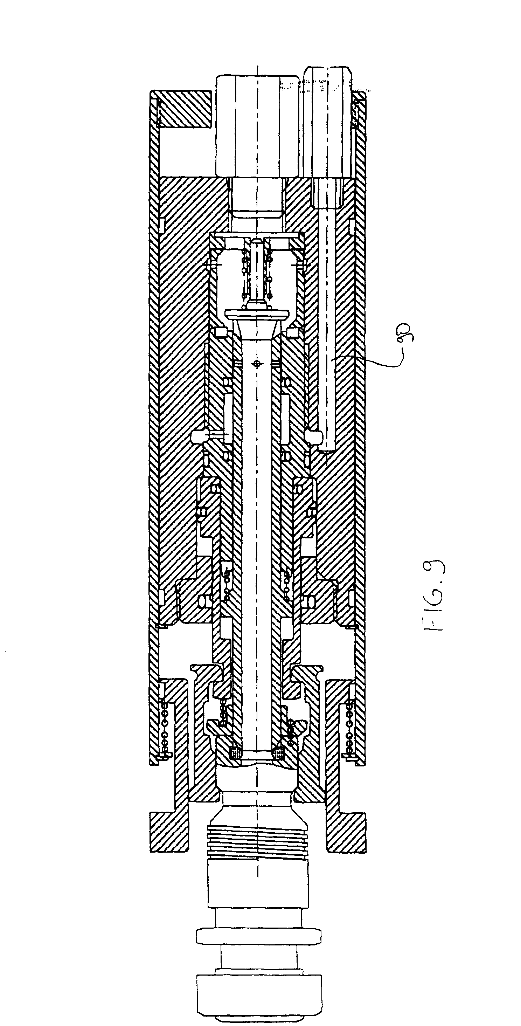

After the filling of the receptacle is complete, the nozzle can be disengaged by sliding the sleeve 10 away from the receptacle inlet 2, as shown in Fig. 6. The equilization of the pressure between the inlet cavity 7 and the piston cavity 38 permits easy disengagement of the nozzle. The sliding of the sleeve acts to withdraw the first pin 31 and second pin 32 from the first bore 33 and second bore 34, respectively. A second groove 60 is defined in second pin 32. The second groove is brought into fluid communication with a second drilling 61 (only exit point shown) in fluid communication with the piston cavity 38. The high pressure fluid from piston cavity 38 vents through the second drilling 61 and second groove 60 out to atmosphere through a vent channel 90 (shown in Fig. 9). The high pressure fluid in the inlet cavity 7 causes the valve 39 to close by reversing the movement of the parts described in Fig. 5.

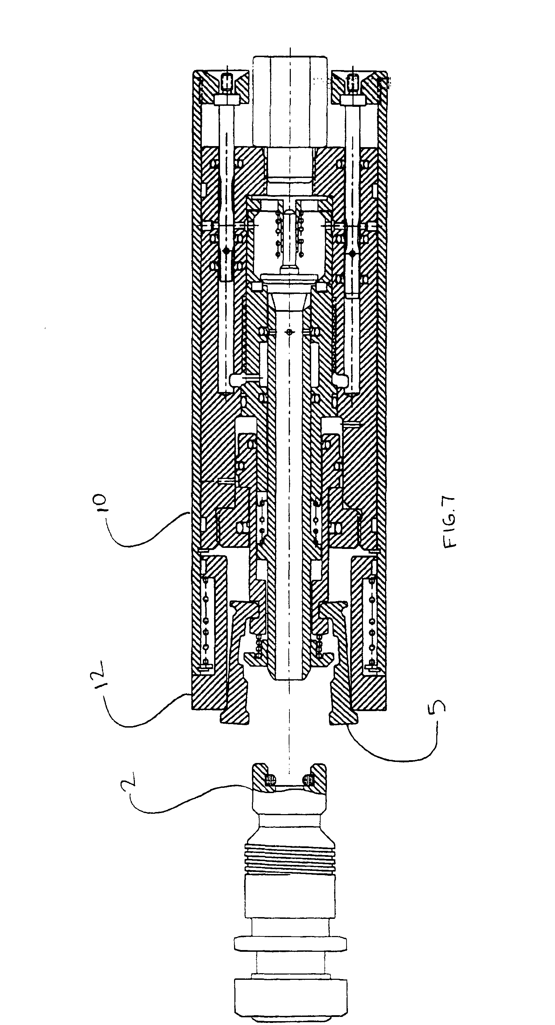

Fig. 7 (identical to Fig. 1) shows the nozzle disengaged from the receptacle inlet 2. The sliding of the sleeve 10 away from the receptacle causes the retaining ring 12 to release to release the jaws 5. The nozzle can be then be withdrawn from the receptacle inlet.

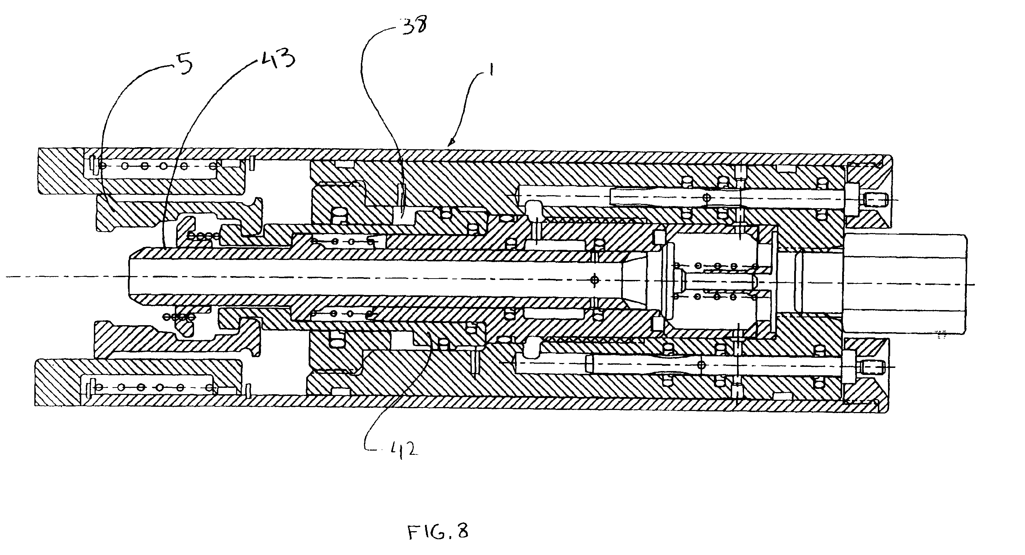

Fig. 8 shows a safety feature of the nozzle 1 in the event that a user attempts to dispense the high pressure fluid without coupling the nozzle to the receptacle inlet 2. In this position, the high pressure fluid fills the piston cavity 38, as described above. Although the piston 42 and the jaws 5 move relative to the rest of the nozzle, as described above, the main pipe 43 does not move because the jaws are not secured to the receptacle inlet 2. Accordingly, the valve cannot be open to permit flow of the high pressure fluid through the nozzle.

It will be appreciated that the above description relates to the preferred embodiment by way of example only. Many variations on the invention will be obvious to those knowledgeable in the field, and such obvious variations are within the scope of the invention as claimed.

## Claims

1. A fluid dispensing nozzle (1) comprising:
an outer sleeve (10), a nozzle inlet (3) for receiving a high pressure fluid and a nozzle outlet (4) for discharging the high pressure fluid;
an inner pipe (43) in fluid communication with the nozzle inlet and the nozzle outlet;
a valve (39) biased to close the fluid flow passage through the inner pipe; and
a piston (42);
wherein the nozzle is **characterized in** further comprising:
a plurality of radially moveable connecting jaws (5) positioned about the periphery of the outlet, the connecting jaws having first ends engaging the piston and second ends for engaging an inlet (2) of a receptacle in which fluid is to be dispensed; and
at least one control ring (11) arranged adjacent the connecting jaws and axially moveable relative thereto, wherein axial movement of the control ring allows radial movement of the connecting jaws and wherein the connecting jaws, the piston and the inner pipe are axially moveable relative to the outer sleeve and to the remainder of the nozzle, and wherein the piston can be actuated to open the valve and permit passage of high pressure fluid through the nozzle.

2. The fluid dispensing nozzle according to claim 1, wherein the valve is arranged in an inlet cavity.

3. The fluid dispensing nozzle according to claim 1, wherein the connecting jaws extend axially beyond the nozzle outlet and are radially movable inwardly to securely attach and seal the nozzle outlet with a receptacle inlet.

4. The fluid dispensing nozzle according to claim 1, wherein the piston is arranged in a piston cavity, the piston cavity is capable of being in fluid communication with the inlet cavity.

5. The fluid dispensing nozzle according to claim 4, wherein the valve is biased to close the fluid flow passage through the inner pipe by the pressure of a high pressure fluid in the inlet cavity, and further wherein when the piston cavity is in fluid communication with the inlet cavity, the area of the piston cavity on which high pressure fluid acts is larger than the area on which high pressure fluid acts to bias the valve closed.

6. A fluid dispensing nozzle (1) comprising:
an outer sleeve (10), a nozzle inlet (3) for receiving a high pressure fluid and a nozzle outlet (4) for discharging the high pressure fluid;
an inner pipe (43) in fluid communication with the nozzle inlet and the nozzle outlet;
a valve (39) biased to close the fluid flow passage through the inner pipe; and
a piston (42);
wherein the nozzle is **characterized in** further comprising:
a plurality of radially movable connecting jaws (5) positioned about the periphery of the outlet, the connecting jaws having first ends engaging the piston and second ends for engaging an inlet (2) of a receptacle in which fluid is to be dispensed, the connecting jaws extending axially beyond the nozzle outlet and being radially moveable inwardly to securely attach and seal the nozzle outlet with a receptacle inlet; and
at least one control ring (11) arranged adjacent to the connecting jaws and axially movable relative thereto, the axial movement of the control ring adapted to allow radial movement of the connecting jaws, wherein the connecting jaws, the piston and the inner pipe are axially movable relative to the outer sleeve and to the remainder of the nozzle, and wherein the piston can be actuated to open the valve and permit passage of high pressure fluid through the nozzle.

7. A fluid dispensing nozzle (1) comprising:
an outer sleeve (10), a nozzle inlet (3) for receiving a high pressure fluid and a nozzle outlet (4) for discharging the high pressure fluid;
an inner pipe (43) in fluid communication with the nozzle inlet and the nozzle outlet;
a valve (39) biased to close the fluid flow passage through the inner pipe; and
a piston (42);
wherein the nozzle is **characterized in** further comprising:
a plurality of radially movable connecting jaws (5) positioned about the periphery of the outlet, the connecting jaws having first ends engaging the piston and second ends for engaging an inlet (2) of a receptacle in which fluid is to be dispensed; and
a nozzle housing (30) having at least one bore (33,34) therein, at least one pin (31,32) connecting to the outer sleeve and received in the bore, and at least one channel (35,37) in the pin which is in fluid communication with a piston cavity in which the piston is arranged, wherein the connecting jaws, the piston and the inner pipe are axially movable relative to the outer sleeve, and wherein the piston can be actuated to open the valve and permit passage of high pressure fluid through the nozzle.

## Patentansprüche

1. Fluidausgabedüse (1), die Folgendes umfasst:
eine Außenhülse (10), einen Düseneinlass (3) zur Aufnahme eines Hochdruckfluids und einen Düsenauslass (4) zur Ausgabe des Hochdruckfluids;
ein Innenrohr (43) in Fluidverbindung mit dem Düseneinlass und dem Düsenauslass;
ein Ventil (39), das so vorgespannt ist, dass es den Strömungskanal durch das Innenrohr verschließt; und
einen Kolben (42);
wobei die Düse **dadurch gekennzeichnet ist, dass** sie ferner Folgendes umfasst:
eine Mehrzahl von radial beweglichen Verbindungsbacken (5), die um den Umfang des Auslasses positioniert sind, wobei die Verbindungsbacken erste Enden, die in den Kolben eingreifen, und zweite Enden aufweisen, die in einen Einlass (2) eines Gefäßes eingreifen, in das Fluid ausgegeben werden soll; und
wenigstens einen Regulierring (11), der neben den Verbindungsbacken angeordnet und axial relativ dazu beweglich ist, wobei eine axiale Bewegung des Regulierrings eine radiale Bewegung der Verbindungsbacken zulässt, und wobei die Verbindungsbacken, der Kolben und das Innenrohr axial relativ zur Außenhülse und zum Rest der Düse beweglich sind, und wobei der Kolben betätigt werden kann, um das Ventil zu öffnen und die Passage von Hochdruckfluid durch die Düse zuzulassen.

2. Fluidausgabedüse nach Anspruch 1, bei der das Ventil in einem Einlasshohlraum angeordnet ist.

3. Fluidausgabedüse nach Anspruch 1, bei der die Verbindungsbacken axial über den Düsenauslass hinaus verlaufen und radial nach innen beweglich sind, um den Düsenauslass fest und dicht an einem Gefäßeinlass anzubringen.

4. Fluidausgabedüse nach Anspruch 1, bei der der Kolben in einem Kolbenhohlraum angeordnet ist, wobei der Kolbenhohlraum in Fluidverbindung mit dem Einlasshohlraum sein kann.

5. Fluidausgabedüse nach Anspruch 4, bei der das Ventil so vorgespannt ist, dass es den Strömungskanal durch das Innenrohr durch den Druck eines Hochdruckfluids im Einlasshohlraum verschließen kann, und wobei ferner dann, wenn der Kolbenhohlraum in Fluidverbindung mit dem Einlasshohlraum ist, der Bereich des Kolbenhohlraums, auf den Hochdruckfluid wirkt, größer ist als der Bereich, auf dem Hochdruckfluid das Ventil in die Schließstellung vorspannt.

6. Fluidausgabedüse (1), die Folgendes umfasst:
eine Außenhülse (10), einen Düseneinlass (3) zur Aufnahme eines Hochdruckfluids und einen Düsenauslass (4) zum Ablassen des Hochdruckfluids;
ein Innenrohr (43) in Fluidverbindung mit dem Düseneinlass und dem Düsenauslass;
ein Ventil (39), das so vorgespannt ist, dass es den Strömungskanal durch das Innenrohr verschließt; und
einen Kolben (42);
wobei die Düse **dadurch gekennzeichnet ist, dass** sie ferner Folgendes umfasst:
eine Mehrzahl von radial beweglichen Verbindungsbacken (5), die um die Peripherie des Auslasses positioniert sind, wobei die Verbindungsbacken erste Enden haben, die in den Kolben eingreifen, und zweite Enden zum Eingreifen in den Einlass (2) eines Gefäßes, in das Fluid ausgegeben werden soll, wobei die Verbindungsbacken axial über den Düsenauslass hinaus verlaufen und radial nach innen beweglich sind, um den Düsenauslass an einem Gefäßeinlass fest und dicht anzubringen; und
wenigstens einen Regulierring (11), der neben den Verbindungsbacken angeordnet ist und axial relativ dazu beweglich ist, wobei die axiale Bewegung des Regulierrings die Aufgabe hat, eine radiale Bewegung der Verbindungsbacken zuzulassen, wobei die Verbindungsbacken, der Kolben und das Innenrohr axial relativ zur Außenhülse und zum Rest der Düse beweglich sind, und wobei der Kolben betätigt werden kann, um das Ventil zu öffnen und die Passage von Hochdruckfluid durch die Düse zuzulassen.

7. Fluidausgabedüse (1), die Folgendes umfasst:
eine Außenhülse (10), einen Düseneinlass (3) zur Aufnahme eines Hochdruckfluids und einen Düsenauslass (4) zum Ablassen des Hochdruckfluids;
ein Innenrohr (43) in Fluidverbindung mit dem Düseneinlass und dem Düsenauslass;
ein Ventil (39), das so vorgespannt ist, dass es den Strömungskanal durch das Innenrohr verschließt; und
einen Kolben (42);
wobei die Düse **dadurch gekennzeichnet ist, dass** sie ferner Folgendes umfasst:
eine Mehrzahl von radial beweglichen Verbindungsbacken (5), die um die Peripherie des Auslasses positioniert sind, wobei die Verbindungsbacken erste Enden haben, die in den Kolben eingreifen, und zweite Enden zum Eingreifen in den Einlass (2) eines Gefäßes, in das Fluid ausgegeben werden soll; und
ein Düsengehäuse (30) mit wenigstens einer Bohrung (33, 34) darin, wenigstens einem Bolzen (31, 32), der mit der Außenhülse verbunden ist und in der Bohrung aufgenommen wird, und wenigstens einem Kanal (35, 37) in dem Bolzen, der in Fluidverbindung mit einem Kolbenhohlraum ist, in dem der Kolben angeordnet ist, wobei die Verbindungsbacken, der Kolben und das Innenrohr axial relativ zur Außenhülse beweglich sind, und wobei der Kolben betätigt werden kann, um das Ventil zu öffnen und die Passage von Hochdruckfluid durch die Düse zuzulassen.

## Revendications

1. Une buse de distribution de fluide (1) comprenant:
un manchon extérieur (10), une entrée de buse (3) permettant de recevoir un fluide haute pression et une sortie de buse (4) permettant de refouler le fluide haute pression ;
un tuyau intérieur (43) en communication fluide avec l'entrée de buse et la sortie de buse ;
une valve (39) tarée pour fermer le passage du courant fluide à travers le tuyau intérieur ; et
un piston (42) ;
dans quoi la buse est **caractérisée en ce qu'**elle comprend encore :
une pluralité de mors de raccordement radialement mobiles (5) positionnés à la périphérie de la sortie, les mors de raccordement ayant des premières extrémités engageant le piston et des deuxièmes extrémités pour engager une entrée (2) d'un réceptacle dans lequel du fluide doit être distribué ; et
au moins une bague de commande (11) arrangée au droit des mors de raccordement et axialement mobile relativement à ces derniers, dans quoi le mouvement axial de la bague de commande permet le mouvement radial des mors de raccordement et dans quoi les mors de raccordement, le piston et le tuyau intérieur sont axialement mobiles relativement au manchon extérieur et au reste de la buse et dans quoi le piston peut être actionné pour ouvrir la valve et permettre le passage de fluide haute pression à travers la buse.

2. La buse de distribution de fluide conformément à la revendication 1, dans quoi la valve est arrangée dans une cavité d'entrée.

3. La buse de distribution de fluide conformément à la revendication 1, dans quoi les mors de raccordement s'étendent axialement au-delà de la sortie de buse et sont radialement mobiles vers l'intérieur pour bien attacher et étanchéifier la sortie de buse avec une entrée de réceptacle.

4. La buse de distribution de fluide conformément à la revendication 1, dans quoi le piston est arrangé dans une cavité de piston, la cavité de piston pouvant être en communication fluide avec la cavité d'entrée.

5. La buse de distribution de fluide conformément à la revendication 4, dans quoi la valve est tarée pour fermer le passage du courant fluide à travers le tuyau intérieur par la pression d'un fluide haute pression dans la cavité d'entrée, et encore dans quoi, lorsque la cavité de piston est en communication fluide avec la cavité d'entrée, la surface de la cavité de piston sur laquelle agit le fluide haute pression est plus grande que la surface sur laquelle agit le fluide haute pression pour tarer la valve fermée.

6. Une buse de distribution de fluide (1) comprenant:
un manchon extérieur (10), une entrée de buse (3) permettant de recevoir un fluide haute pression et une sortie de buse (4) permettant de refouler le fluide haute pression ;
un tuyau intérieur (43) en communication fluide avec l'entrée de buse et la sortie de buse ;
une valve (39) tarée pour fermer le passage du courant fluide à travers le tuyau intérieur ; et
un piston (42) ;
dans quoi la buse est **caractérisée en ce qu'**elle comprend encore :
une pluralité de mors de raccordement radialement mobiles (5) positionnés à la périphérie de la sortie, les mors de raccordement ayant des premières extrémités engageant le piston et des deuxièmes extrémités pour engager une entrée (2) d'un réceptacle dans lequel du fluide doit être distribué, les mors de raccordement s'étendant axialement au-delà de la sortie de buse et étant radialement mobiles vers l'intérieur pour bien attacher et étanchéifier la sortie de buse avec une entrée de réceptacle ; et
au moins une bague de commande (11) arrangée au droit des mors de raccordement et axialement mobile relativement à ces derniers, le mouvement axial de la bague de commande étant adapté pour permettre le mouvement radial des mors de raccordement, dans quoi les mors de raccordement, le piston et le tuyau intérieur sont axialement mobiles relativement au manchon extérieur et au reste de la buse, et dans quoi le piston peut être actionné pour ouvrir la valve et permettre le passage de fluide haute pression à travers la buse.

7. Une buse de distribution de fluide (1) comprenant:
un manchon extérieur (10), une entrée de buse (3) permettant de recevoir un fluide haute pression et une sortie de buse (4) permettant de refouler le fluide haute pression ;
un tuyau intérieur (43) en communication fluide avec l'entrée de buse et la sortie de buse ;
une valve (39) tarée pour fermer le passage du courant fluide à travers le tuyau intérieur ; et
un piston (42) ;
dans quoi la buse est **caractérisée en ce qu'**elle comprend encore :
une pluralité de mors de raccordement radialement mobiles (5) positionnés à la périphérie de la sortie, les mors de raccordement ayant des premières extrémités engageant le piston et des deuxièmes extrémités pour engager une entrée (2) d'un réceptacle dans lequel du fluide doit être distribué ; et
un logement de buse (30) comportant au moins un alésage (33, 34), au moins une goupille (31, 32) se connectant au manchon extérieur et reçu dans l'alésage, et au moins un canal (35, 37) dans la goupille qui est en communication fluide avec une cavité de piston dans laquelle le piston est arrangé, dans quoi les mors de raccordement, le piston et le tuyau intérieur sont axialement mobiles, relativement au manchon extérieur, et dans quoi le piston peut être actionné pour ouvrir la valve et permettre le passage de fluide haute pression à travers la buse.
